# FASCICULE DE BREVET EUROPEEN

(11) **EP 1 885 208 B1**
(45) Date de publication et mention de la délivrance du brevet: **22.10.2014**
(21) Numéro de dépôt: 06764630.7
(22) Date de dépôt: 16.05.2006
(51) Int. Cl.: A23L 3/22, A23L 3/00, A23L 3/32, A23L 3/16

(54) **INSTALLATION POUR LE TRAITEMENT THERMIQUE D'UN LIQUIDE THERMOSENSIBLE**
ANLAGE FÜR DIE HITZEBEHANDLUNG EINER HITZEEMPFINDLICHEN FLÜSSIGKEIT
INSTALLATION FOR THE HEAT TREATMENT OF A HEAT-SENSITIVE LIQUID

(30) Priorité: 19.05.2005 FR 0505021
(43) Date de publication de la demande: 13.02.2008
(73) Titulaire: Gea Process Engineering, 78180 Montigny le Bretonneux (FR)
(72) Inventeur: VAN LOON, Gerardus, F-78650 Beynes (FR)
(74) Mandataire: Zimmermann, Alain
(86) Numéro de dépôt international: PCT/FR2006/001093
(87) Numéro de publication internationale: WO 2006/123047

(56) Documents cités:
- BE-A- 538 399
- US-A- 2 130 645
- US-A- 2 353 912
- US-A- 3 966 998
- US-A- 4 689 237
- US-A1- 2002 012 730
- US-A1- 2003 096 045

## Description

La présente invention a pour objet une installation pour le traitement thermique continu d'un liquide sensible à la chaleur, tel qu'un produit laitier, comprenant :
- une chambre de mélange pourvue de moyens d'introduction dudit liquide et de vapeur d'eau, où ledit liquide est soumis à un traitement thermique sous l'effet de la chaleur apportée par ladite vapeur d'eau,
- un tube de chambrage dont l'une des extrémités est en communication avec la chambre de mélange et l'autre extrémité est munie d'un moyen de réduction de section délimitant un passage d'écoulement, et
- une chambre de détente dont l'entrée est constituée par ledit passage.

Des installations de ce type sont déjà connues et notamment utilisées dans le domaine de la pasteurisation et de la stérilisation en continu du lait.

Le liquide y est chauffé dans la chambre de mélange par l'injection de vapeur d'eau, le liquide ainsi chauffé circulant ensuite dans le tube chambrage maintenu en pression et température à l'aide dudit moyen de réduction de section, pour parvenir finalement dans la chambre de détente où il est détendu pour ne pas prolonger son exposition aux hautes températures et éliminer par évaporation sous pression réduite la majeure partie de l'eau introduite dans le liquide par l'injection de vapeur.

Dans ces installations connues (demande NIZO WO 01/56394 A1), le moyen de réduction de section qui se trouve dans la chambre de détente de sorte qu'aucune paroi en aval n'est soumise à de hautes températures, délimite un passage d'écoulement de section constante, ce qui pose le problème suivant.

En cas d'augmentation du débit d'arrivée de liquide dans la chambre de mélange, il y a augmentation de la perte de charge au niveau du moyen de réduction de section et donc augmentation de la pression en amont de ce dernier.

Il s'ensuit que pour faire pénétrer la vapeur d'eau dans la chambre de mélange, il faut augmenter la pression d'introduction de cette vapeur, ce qui s'accompagne d'une augmentation de sa température et par conséquent d'un risque de dégradation du liquide thermosensible.

On connaît également, par le document US 2 130 645, un appareil pour pasteuriser et désodoriser des liquides, ledit appareil comportant une chambre à vide, une conduite d'alimentation s'étendant dans ladite chambre et dont l'extrémité dans la chambre comporte une ouverture dont la section est réduite par rapport à la section du reste de la conduite, et des moyens pour injecter de la vapeur dans la conduite, ladite ouverture de la conduite étant dotée d'un déflecteur pour déverser le mélange à pasteuriser dans la chambre.

On connaît de même, par le document US 2 353 912, des moyens pour homogénéiser et traiter thermiquement des fluides, lesdits moyens comportant une chambre de mélange munie d'une entrée pour les fluides, un déflecteur conique supporté par une paroi de la chambre, une buse à vapeur communiquant avec l'intérieur de la chambre par le sommet du déflecteur, un tube de sortie présentant un orifice réduit, relié à une paroi de la chambre opposée au déflecteur, et une valve associée audit tube de sortie pour contrôler le débit du fluide s'y écoulant.

On connaît enfin, par le document BE 538 399, un procédé et un appareil pour le traitement de liquides, permettant de porter rapidement le liquide à des températures élevées par injection de vapeur, puis de le refroidir également rapidement par détente brusque, la détente étant répétée au moins deux fois. L'appareil permettant la mise en oeuvre du procédé comporte plusieurs étages de détente reliés entre eux par des conduites, le réglage de la pression différentielle entre deux étages consécutifs étant effectué par des obturateurs.

Pour surmonter les inconvénients de l'art antérieur, il est proposé selon la présente invention, une installation conforme à celle décrite au premier paragraphe de cette description et caractérisée en ce qu'elle comprend en outre des moyens de réglage de la section dudit passage d'écoulement.

Ces moyens de réglage permettent d'agir sur la section du passage d'écoulement en fonction du débit d'entrée du liquide dans la chambre de mélange, de manière à maintenir sensiblement constants le temps et la température de chambrage et ainsi éviter la dégradation du liquide par la chaleur.

Lesdits moyens de réglage peuvent être des moyens manuels ; en variante, ils peuvent faire partie d'une boucle de régulation pour le maintien du couple temps de chambrage/température de chambrage.

Les moyens de réglage susvisés comprennent de préférence des moyens d'obturation de manière contrôlée dudit passage d'écoulement.

Selon un mode de réalisation préféré de l'invention, lesdits moyens d'obturation comprennent un piston mobile par rapport au passage d'écoulement afin de modifier la section de ce dernier.

Par ailleurs, ledit piston peut comporter une tige de piston et des moyens d'actionnement de ce dernier.

Selon un autre mode de réalisation préféré, lesdits moyens de réglage, moyens d'obturation, piston et tige de piston sont disposés au moins partiellement dans ladite chambre de détente.

Ces moyens, piston et tige de piston se trouvent donc situés, au moins partiellement, dans une zone où règne une température relativement clémente (par rapport à celle régnant dans le tube de chambrage) pour le liquide thermosensible ; de ce fait, ces moyens, piston et tige ne subissent qu'un encrassement très modéré, voire nul, par les produits de dégradation dudit liquide.

On ajoutera que la chambre de détente susvisée peut être une chambre de pré-détente.

L'extrémité du tube de chambrage, munie du moyen de réduction de section, est avantageusement prolongée par un élément annulaire dont la face aval est complémentaire de la surface du piston.

Selon un mode de réalisation particulièrement préféré, l'un au moins des organes constitués par ledit élément annulaire, le piston et la tige de piston comprend en son sein des moyens de circulation d'un fluide de refroidissement.

Grâce à cette disposition, les surfaces de ces organes sont à une température relativement basse ; il s'ensuit que la dégradation du liquide thermosensible sur ces surfaces est encore réduite, s'il en était besoin.

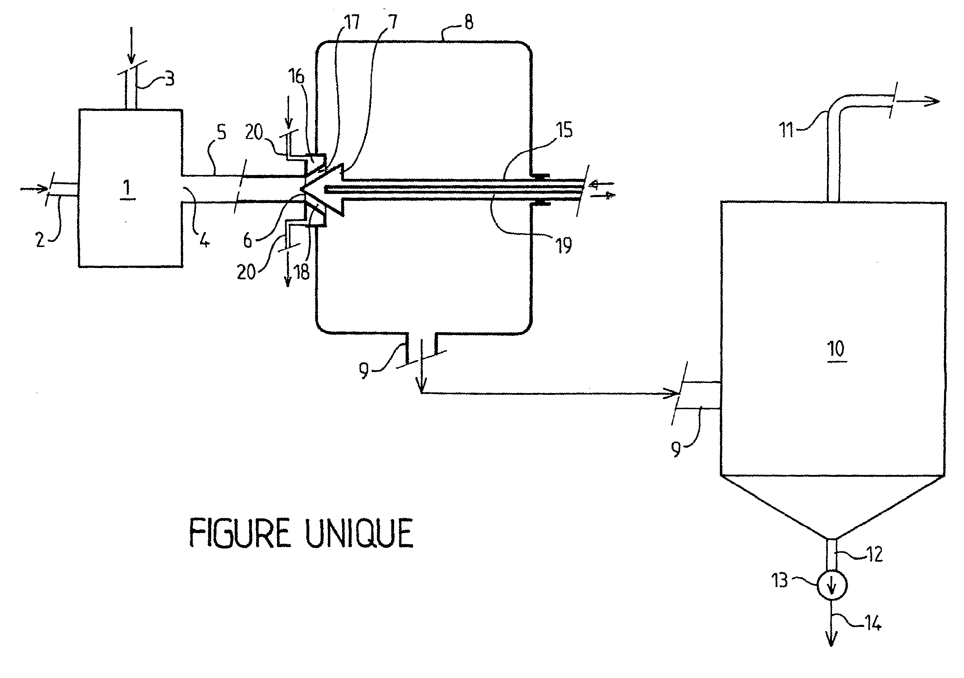

Un mode d'exécution de la présent invention sera décrit ci-dessous à titre d'exemple non limitatif en référence au dessin annexé dont la figure unique est une représentation schématique d'une installation de traitement UHT en continu d'un produit thermosensible tel que le lait.

Une telle installation comprend de manière traditionnelle une chambre de mélange 1 de structure connue en soi et pourvue d'une arrivée 2 de liquide thermosensible et d'une arrivée 3 de vapeur d'eau, la température et le débit d'introduction de la vapeur mise en oeuvre étant choisie en fonction de la nature du liquide thermosensible à traiter.

La chambre de mélange 1 présente une sortie 4 qui s'ouvre sur l'une des extrémités d'un tube de chambrage 5 dont l'autre extrémité 6 est associée à un piston 7 destiné à réduire et à régler sa section.

Le passage d'écoulement annulaire délimité par l'extrémité 6 et ledit piston 7 est confondu avec l'entrée d'une chambre de pré-détente 8 qui communique par un conduit 9 avec une chambre de détente 10 pourvue, à sa partie haute, d'une sortie de vapeur 11 (reliée à un condenseur non représenté) et, à sa partie basse, d'une sortie de produit 12 reliée à l'aspiration d'une pompe de reprise 13 dont le refoulement 14 peut par exemple amener le produit vers un procédé aval.

Comme le montre le dessin, dans l'exemple choisi, le piston 7 est de forme conique et se prolonge par une tige de piston 15 terminée par des organes de commande (non représentés) disposés à l'extérieur de la chambre de pré-détente 8.

Selon une autre caractéristique de la présente invention, le piston et au moins une partie de la tige de piston sont situés dans la chambre de pré-détente 8.

Ainsi, le piston et sa tige s'étendent de la face avant de la chambre 8 jusqu'à la face arrière de cette chambre, avant de traverser cette face arrière ; cette dernière porte au niveau du passage de la tige des moyens d'étanchéité appropriés autorisant le libre coulissement de cette tige.

Cette dernière se prolonge ensuite jusqu'aux organes de commande.

Selon une autre caractéristique encore de la présente invention, l'extrémité 6 est prolongée par un élément annulaire 16 dont la face aval 17 est complémentaire de la surface conique du piston 7; dans cette configuration, le passage annulaire susmentionné, référencé 18, est réalisé entre cette face 17 et cette surface conique.

Selon une caractéristique supplémentaire et préférée de l'invention, le piston et sa tige renferment un circuit de liquide de refroidissement 19 alimenté à partir d'une source de liquide froid, par exemple de l'eau.

L'élément annulaire 16 peut de même comporter en son sein un circuit de refroidissement 20 alimenté par un liquide froid tel que de l'eau.

L'installation ainsi décrite fonctionne de la manière suivante.

Le liquide à traiter est amené en continu, par exemple au moyen d'une pompe volumétrique, dans la chambre de mélange 1 par l'arrivée 2.

Dans cette même chambre 1 on introduit de la vapeur d'eau par l'arrivée 3 ; cette vapeur va céder sa chaleur latente de condensation au liquide qui se réchauffe.

Le produit (mélange du liquide thermosensible et des condensats provenant de la vapeur plus un excès éventuel de vapeur) est ensuite amené par la sortie 4 dans le tube de chambrage 5 dans lequel se poursuit le traitement thermique.

Ce produit est alors évacué du tube 5 par le passage annulaire 18 pour pénétrer dans la chambre de pré-détente 8 où il subit une première détente, c'est-à-dire une première évaporation partielle et un refroidissement.

Le mélange liquide + vapeur d'eau, résultant de cette détente, est ensuite acheminé par le conduit 9 dans la chambre de détente 10 où il subit une nouvelle évaporation partielle ; la vapeur résultante est évacuée par la sortie 11 vers un condenseur (non représenté), et le liquide concentré est évacué à la base de la chambre 10 par la sortie 12.

Si pour une raison ou une autre, le débit d'arrivée du liquide thermosensible dans la chambre de mélange 1 est modifié, afin de maintenir la température souhaitée, il faut ajuster en conséquence la quantité de vapeur d'eau introduite dans cette chambre.

Ceci a pour effet de modifier la température régnant dans la chambre de mélange 1 et le tube de chambrage 5, ainsi que le temps de chambrage, ce qui peut avoir des conséquences néfastes sur le liquide traité dans le cas où ladite modification de débit est une augmentation de débit (stérilisation insuffisante et dégradation thermique du liquide).

Pour remédier à cet état de chose, il suffit selon l'invention d'agir sur la section du passage annulaire 18, en déplaçant de manière appropriée le piston 7.

Ainsi, dans le cas évoqué ci-dessus d'une augmentation du débit du liquide thermosensible, il convient pour maintenir le couple température de chambrage/temps de chambrage d'augmenter ladite section du passage 18 dans une proportion suffisante.

Par l'ajustement de cette section du passage 18 on peut à la fois maintenir la pression dans la chambre de mélange et, dans le cas d'un excès de vapeur, conserver le temps de chambrage en jouant sur ledit excès.

En conclusion, grâce à la présente invention, on dispose d'une installation d'une grande flexibilité en ce sens qu'elle s'adapte aisément à toute variation du débit d'entrée du liquide thermosensible à traiter ce que ne permettent pas les systèmes antérieurs.

En outre, les organes permettant une telle adaptation (piston, tige de piston) sont situés dans une zone de l'installation, où règne une température relativement basse par rapport aux autres points de cette installation, ce par quoi les risques d'une dégradation du produit thermosensible sur lesdits organes sont très réduits.

## Revendications

1. Installation pour le traitement thermique continu d'un liquide sensible à la chaleur, tel qu'un produit laitier, comprenant :
- une chambre de mélange (1) pourvue de moyens d'introduction (2, 3) dudit liquide et de vapeur d'eau, où ledit liquide est soumis à un traitement thermique sous l'effet de la chaleur apportée par ladite vapeur d'eau,
- un tube de chambragé (5) dont l'une des extrémités est en communication avec la chambre de mélange (1) et l'autre extrémité est munie d'un moyen de réduction de section (7) délimitant un passage d'écoulement (18), et
- une chambre de détente (8) dont l'entrée est constituée par ledit passage (18), et
- des moyens d'obturation de manière contrôlée dudit passage d'écoulement (18), pour le réglage de la section de ce passage, ces moyens d'obturation comprenant un piston (7) mobile par rapport au passage d'écoulement (18) afin de modifier la section de ce dernier, ce piston comportant une tige de piston (15) pourvue de moyens d'actionnement de cette dernière,
**caractérisée en ce que** le piston (7) et la tige de piston (15) sont entièrement disposés dans ladite chambre de détente (8).

2. Installation selon la revendication 1, **caractérisée en ce que** ladite chambre de détente (8) est une chambre de pré-détente.

3. Installation selon la revendication 1 ou 2, **caractérisée en ce que** l'extrémité (6) du tube de chambrage (5) est prolongée par un élément annulaire (16) dont la face aval (17) est complémentaire de la surface du piston (7).

4. Installation selon la revendication 3, **caractérisée en ce que** l'un au moins des organes constitués par ledit élément annulaire (16), le piston (7) et la tige de piston (15) comprend en son sein des moyens de circulation d'un fluide de refroidissement (19 ; 20).

## Patentansprüche

1. Anlage für die kontinuierliche Hitzebehandlung einer hitzeempfindlichen Flüssigkeit, wie z.B. eines Milcherzeugnisses, die folgendes umfasst:
- eine Mischkammer (1), welche mit Einrichtungen für die Zuführung (2, 3) der genannten Flüssigkeit und von Wasserdampf ausgestattet ist, und wo die genannte Flüssigkeit einer Hitzebehandlung unter Einwirkung der durch den genannten Wasserdampf zugeführten Hitze unterzogen wird,
- ein Ummantelungsrohr (5), dessen eines Ende mit der Mischkammer (1) kommuniziert, und dessen anderes Ende mit einer Vorrichtung zur Querschnittsverringerung (7) ausgestattet ist, die eine Strömungs-Durchführung (18) begrenzt, und
- eine Entspannungskammer (8), deren Einlauf die genannte Durchführung (18) bildet, und
- Vorrichtungen zum gesteuerten Verschließen der genannten Strömungs-Durchführung (18), zum Zwecke der Regelung des Querschnitts dieser Durchführung, wobei diese Verschlussvorrichtungen einen im Verhältnis zur Strömungs-Durchführung (18) beweglichen Kolben (7) umfassen, um den Querschnitt der genannten Durchführung zu verändern, und wobei dieser Kolben eine Kolbenstange (15) umfasst, welche mit Vorrichtungen zur Betätigung des genannten Kolbens ausgestattet ist,
die **dadurch gekennzeichnet ist, dass** der Kolben (7) und die Kolbenstange (15) komplett innerhalb der genannten Entspannungskammer (8) angeordnet sind.

2. Anlage gemäß dem Patentanspruch 1, die **dadurch gekennzeichnet ist, dass** die genannte Entspannungskammer (8) eine Vorentspannungskammer ist.

3. Anlage gemäß dem Patentanspruch 1 oder 2, die **dadurch gekennzeichnet ist, dass** das Ende (6) des Ummantelungsrohrs (5) durch ein ringförmiges Element (16) verlängert ist, dessen stromabwärts gewandte Seite (17) komplementär zur Kolbenfläche (7) ist.

4. Anlage gemäß dem Patentanspruch 3, die **dadurch gekennzeichnet ist, dass** zumindest eine der aus dem genannten ringförmigen Element (16), dem Kolben (7) und der Kolbenstange (15) bestehenden Komponenten intern Umwälzvorrichtungen für ein Kühlmedium (19 20) umfasst.

## Claims

1. Installation for the continuous heat treatment of a heat-sensitive liquid such as a dairy product, comprising:
- a mixing chamber (1) provided with means (2, 3) of introducing the said liquid and steam, in which the said liquid is subjected to a heat treatment under the effect of the heat supplied by the said steam,
- a holding tube (5), one of the ends of which is in communication with the mixing chamber (1) and the other end of which is provided with a section-reducing means (7) delimiting a flow passage (18), and
- an expansion chamber (8) the inlet of which consists of the said passage (18), and
- means for closing off the said flow passage (18) in a controlled manner in order to regulate the cross section of this passage, these closing-off means comprising a piston (7) able to move in relation to the flow passage (18) in order to alter the cross section thereof, this piston comprising a piston rod (15) provided with means of operating same,
**characterized in that** the piston (7) and the piston rod (15) are housed entirely inside the said expansion chamber (8).

2. Installation according to Claim 1, **characterized in that** the said expansion chamber (8) is a pre-expansion chamber.

3. Installation according to Claim 1 or 2, **characterized in that** the end (6) of the holding tube (5) is extended by an annular element (16) the downstream face (17) of which complements the surface of the piston (7).

4. Installation according to Claim 3, **characterized in that** of the said annular element (16), the piston (7) and the piston rod (15), at least one comprises within it means (19; 20) for circulating a cooling fluid.
